# EUROPÄISCHE PATENTANMELDUNG

(11) **EP 1 496 225 A2**
(43) Veröffentlichungstag der Anmeldung: **12.01.2005**
(21) Anmeldenummer: 04102669.1
(22) Anmeldetag: 14.06.2004
(51) Int. Cl.: F02D 41/02, F01N 3/023

(54) **Verfahren zum Betreiben einer Brennkraftmaschine**

(30) Priorität: 10.07.2003 DE 10331331
(71) Anmelder: Volkswagen AG, 38436 Wolfsburg (DE)
(72) Erfinder: Lang, Axel, 38304, Wolfenbüttel (DE)
(74) Vertreter: Kandlbinder, Markus Christian

(57) **Zusammenfassung**

Die Erfindung betrifft ein Verfahren zum Betreiben einer Brennkraftmaschine, insbesondere eines Kraftfahrzeuges, mit einer in einem Abgastrakt der Brennkraftmaschine angeordneten Abgasnachbehandlungsanordnung mit wenigstens einem Katalysator und einer stromauf des Katalysators angeordneten ersten Lambdasonde und einer stromab des Katalysators angeordneten zweiten Lambdasonde, wobei zur Bestimmung einer Sauerstoffspeicherfähigkeit des Katalysators in einem ersten Schritt (a) ein Lambdawert vor dem Katalysator aktiv auf einen Wert kleiner 1 verstellt wird, bis ein in dem Katalysator gespeicherter Sauerstoff vollständig ausgetragen ist, und anschließend in einem zweiten Schritt (b) der Lambdawert vor dem Katalysator aktiv auf einen Wert größer 1 verstellt wird, bis der Katalysator vollständig mit Sauerstoff beladen ist, wobei mittels einer Sauerstoffbilanzierung die Sauerstoffspeicherfähigkeit des Katalysators bestimmt wird, wobei die Abgasnachbehandlungsanordnung zusätzlich einen dem Katalysator nachgeordneten NOx-Speicherkatalysator aufweist, wobei unter vorbestimmten Bedingungen eine zeitlich begrenzte NOₓ-Regeneration des NOₓ-Speicherkatalysators durchgeführt wird. Hierbei wird die NOₓ-Regeneration als erster Schritt (a) durchgeführt und nach Beendigung der NOₓ-Regeneration der zweite Schritt (b) durchgeführt.

## Beschreibung

Die Erfindung betrifft ein Verfahren zum Betreiben einer Brennkraftmaschine, insbesondere eines Kraftfahrzeuges, mit einer in einem Abgastrakt der Brennkraftmaschine angeordneten Abgasnachbehandlungsanordnung mit wenigstens einem Katalysator und einer stromauf des Katalysators angeordneten ersten Lambdasonde und einer stromab des Katalysators angeordneten zweiten Lambdasonde, wobei zur Bestimmung einer Sauerstoffspeicherfähigkeit des Katalysators in einem ersten Schritt (a) ein Lambdawert vor dem Katalysator aktiv auf einen Wert kleiner 1 verstellt wird, bis ein in dem Katalysator gespeicherter Sauerstoff vollständig ausgetragen ist, und anschließend in einem zweiten Schritt (b) der Lambdawert vor dem Katalysator aktiv auf einen Wert größer 1 verstellt wird, bis der Katalysator vollständig mit Sauerstoff beladen ist, wobei mittels einer Sauerstoffbilanzierung die Sauerstoffspeicherfähigkeit des Katalysators bestimmt wird, wobei die Abgasnachbehandlungsanordnung zusätzlich einen dem Katalysator nachgeordneten NOx-Speicherkatalysator aufweist, wobei unter vorbestimmten Bedingungen eine zeitlich begrenzte NOₓ-Regeneration des NOₓ-Speicherkatalysators durchgeführt wird, gemäß dem Oberbegriff des Anspruchs 1.

Zur Diagnose des Zustandes eines Katalysators einer Brennkraftmaschine sind Verfahren bekannt, die eine Sauerstoffspeicherfähigkeit (OSC - Oxygen-Storage-Capacity) des Katalysators mittels aktiver Lambdaverstellung messen. Diese Speicherfähigkeit korreliert mit der Kohlenwasserstoff(HC)-Konvertierung im Katalysator. Wenn der Katalysator gute Konvertierungseigenschaften besitzt, werden die Lambdaschwankungen vor dem Katalysator, welche durch den Lambdaregler aktiv erzeugt und von einer ersten Lambdasonde erfaßt werden, durch die Sauerstoffspeicherfähigkeit des Katalysators geglättet. Hat der Katalysator infolge Alterung, Vergiftung durch verbleiten Kraftstoff oder durch Verbrennungsaussetzer keine oder nur verminderte Konvertierungseigenschaften, so schlägt die stromauf des Katalysators vorhandene Regelschwingung auf die Lambdasonde stromab des Katalysators durch. Durch Vergleich der Signalamplituden der beiden Lambdasonden kann auf einen funktionsfähigen oder defekten Katalysator geschlossen werden, wie beispielsweise aus der DE 23 28 459 A1 bekannt.

Zu Diagnosezwecken wird die OSC zusätzlich mit einem Anspring- und Konvertierungsverhalten des Katalysators korreliert. Zur Messung des OSC wird beispielsweise zunächst durch Einstellung eines fetten Lambdawertes von beispielsweise 0,95 bis 0,98 ein ggf. in dem Katalysator gespeicherte Sauerstoff ausgeräumt und anschließend durch Einstellung eines Lambdawertes von beispielsweise 1,02 bis 1,05 mit einem mageren, sauerstoffreichen Abgas wieder mit Sauerstoff befüllt. Dabei wird die OSC über eine Sauerstoffbilanzierung gemessen. Das Entleeren und Befüllen des Katalysators mit Sauerstoff wird dabei über einen Sprung eines Ausgangssignals einer dem Katalysator nachgeschalteten Lambdasonde ins Fette bzw. ins Magere bestimmt und gesteuert.

Aus der DE 199 53 601 A1 ist ein Verfahren zum Überprüfen eines Abgaskatalysators einer Brennkraftmaschine bekannt, wobei während einer Diagnosezeit eine Sauerstoffbeladung des Abgaskatalysators erhöht und aus der während mehrerer Lambdaregelschwingungen gemessenen NOₓ-Konzentration auf die Konvertierungseigenschaften des Abgaskatalysators geschlossen wird.

Aus der DE 198 01 626 A1 ist eine Diagnose eines Katalysators im Abgas von Verbrennungsmotoren bekannt, wobei der Katalysator sowohl eine Sauerstoff- als auch eine Stickoxidspeicherfähigkeit aufweist und wobei die Sauerstoffkonzentration im Abgas vor dem Katalysator wiederholt so erhöht und verringert wird, daß sich die Änderung im Signal einer vor und hinter dem Katalysator angeordneten Abgassonde abbildet. Es wird eine erste Phasenverschiebung zwischen den Signalen beider Sonden beim Anstieg und eine zweite Phasenverschiebung beim Absenken der Sauerstoffkonzentration erfaßt und die Differenz der Phasenverschiebungen bestimmt. Wenn diese Differenz einen vorbestimmten Schwellwert nicht erreicht, wird ein Fehlersignal ausgegeben.

Aus der DE 100 17 931 A1 ist es zur Diagnose einer Abgasreinigungsanlage einer lambdageregelten Brennkraftmaschine bekannt, den Katalysator mit einer gewissen Sauerstoffbelastung zu beaufschlagen, die größer ist, als die normale Betriebsbelastung. Dies wird dadurch erreicht, daß die von der Schwingung des Sondensignals der Vorkat-Lambdasonde eingeschlossene Fläche eines Sollwertes vergrößert wird. Durch Auswertung der Schwingung des Signals der Nachkat-Lambdasonde kann die Abgasreinigungsanlage überprüft werden. Ergibt diese Diagnose eine Fehlfunktion der Abgasreinigungsanlage ohne daß die Fläche der Schwingung des Sondensignals der Vorkat-Lambdasonde auf oder über einen Sollwert vergrößert werden müßte, ist die Vorkat-Lambdasonde defekt. Ansonsten kann auf ein Katalysatorversagen geschlossen werden.

Aus der DE 198 03 828 A1 und der DE 41 12 478 ist ein Verfahren zum Bestimmen einer Sauerstoffspeicherfähigkeit eines Katalysators bekannt, wobei ein Sauerstoffgehalt des Abgases vor und nach dem Katalysator bestimmt, mit dem Luft- bzw. Abgasmassenstrom durch den Motor bzw. Katalysator multipliziert und das Produkt integriert wird. Die Integralwerte sind ein Maß für die Sauerstoffmengen, die dem Katalysator zufließen und aus dem Katalysator herausfließen. Die Differenz der Integralwerte liefert die Änderung des Sauerstoffüllungsgrades des Katalysators im Integrationszeitraum. Dabei wird bei dem Verfahren sichergestellt, daß bei der Diagnose eine vollständige Füllung des Katalysators mit Sauerstoff und eine anschließend völlige Leerung oder umgekehrt erfolgt.

Aus der DE 100 26 213 A1 ist ein Verfahren zum Konfigurieren einer Mehrzahl von Lambdasonden eines Verbrennungsmotors mit zwei Abgasbänken bekannt. Für eine gegebene Verbindungskonfiguration von Lambdasonden und Eingängen eines Motorsteuergerätes wird detektiert, mit welchen Eingängen die Lambdasonden jeweils verbunden sind. Auf dieser Grundlage wird eine korrekte Zuordnung der Lambdasonden zu den Abgasbänken vorgenommen.

Aus der EP 0 897 054 A1 ist ein Verfahren zur Vertauschungsprüfung von Lambdasonden bekannt. Bei einer mehrzylindrigen Brennkraftmaschine mit mindestens zwei separaten Abgasleitungen mit jeweils einem Katalysator und mindestens je einer Lambdasonde pro Abgasleitung wird während einer Prüfzeit, die mindestens der Reaktionszeit bzw. Umschaltzeit der Lambdasonde entspricht, Luft mittels einer Luftquelle einzeln zumindest einer Abgasleitung über zumindest einen Luftanschluß vor der Lambdasonde zugeführt. Ein dadurch veränderter Abgaswert wird von der dem Abgasstrang zugeordneten Lambdasonde schnell und eindeutig identifiziert. Falls das erwartete Signal nicht von der dem ABgasstrang zugeordneten Lambdasonde ausgeht, kann eine Vertauschung der Lambdasonden erkannt werden.

Aus der DE 101 17 244 A1 ist ein Verfahren zur Erkennung vertauscht angeschlossener Sauerstoffsensoren, die im Abgasstrang einer Brennkraftmaschine hintereinander angeordnet und an eine Regeleinrichtung für die Kraftstoffeinspritzung angeschlossen sind, bekannt. Während eines Prüfzeitraumes wird die Kraftstoffeinspritzung abgeschaltet oder das Kraftstoff-Luft-Verhältnis verändert und die Reaktionszeiten bis zum Auftreten der dadurch bedingten Signaländerung der O₂-Sensoren gemessen und ausgewertet.

Aus der DE 100 15 330 A1 ist es bekannt, bei einem Verbrennungsmotor mit NOₓ- Speicherkatalysator im Abgasstrang in Abhängigkeit von Zustandsparametern des NOₓ-Speicherkatalysators NOₓ-Regenerationsmaßnahmen durchzuführen. Bei im Abgasstrang parallel angeordneten NOₓ-Speicherkatalysatoren wird eine gerade durchgeführte NOₓ-Regenerationsmaßnahme in Abhängigkeit von dem spätesten Zeitpunkt beendet, an dem ein für die Beendigung einer NOₓ-Regenerationsmaßnahme charakteristischer Zustandsparameter-Wert an einem der NOₓ-Speicherkatalysatoren gemessen wird.

Der Erfindung liegt die Aufgabe zugrunde, ein Verfahren der o.g. Art bzgl. Diagnosezeiten und Diagnosehäufigkeit für die Abgasnachbehandlungsanordnung zu verbessern.

Diese Aufgabe wird erfindungsgemäß durch ein Verfahren der o.g. Art mit den in Anspruch 1 gelöst. Vorteilhafte Ausgestaltungen der Erfindung sind in den abhängigen Ansprüchen angegeben.

Dazu ist es erfindungsgemäß vorgesehen, daß die NOₓ-Regeneration als erster Schritt (a) bestimmt und nach Beendigung der NOₓ-Regeneration der zweite Schritt (b) durchgeführt wird.

Dies hat den Vorteil, daß die Bestimmung der Sauerstoffspeicherfähigkeit des Katalysators mit einer NOₓ-Regeneration des NOₓ-Speicherkatalysators derart kombiniert ist, daß die Regenerationsphase der NOₓ-Regeneration gleichzeitig als Sauerstoffausräumphase zur Bestimmung der Sauerstoffspeicherfähigkeit des Katalysators dient. Dies reduziert und minimiert Diagnosezeiten mit Abweichung vom optimalen Betriebsmodus der Brennkraftmaschine für einen momentanen Betriebszustand derselben.

Beispielsweise ist der Katalysator ein Vorkatalysator oder ein Hauptkatalysator.

Zweckmäßigerweise laufen Diagnosen von Katalysatorzustand und Zustand der Lambdasonden parallel ab, so daß Diagnosezeiten verringert und Homogenphasen für Diagnosen verkürzt sind.

Die Bestimmung wenigstens eines Parameters der Lambdasonden umfaßt beispielsweise eine Plausibilitätsprüfung, wobei im ersten Schritt (a) und/oder im zweiten Schritt (b) geprüft wird, ob erste und zweite Lambdasonde gleichzeitig die erwartete fette bzw. magere Abgaszusammensetzung anzeigen. In dem Fall, daß die Plausibilitätsprüfung eine Plausibilitätsverletzung ergibt, d.h. eine unterschiedliche Anzeige der Abgaszusammensetzung vor und nach dem Katalysator durch der beiden Lambdasonden, wird bestimmt, ob die erste oder zweite Lambdasonde defekt ist. Zur Bestimmung der fehlerhaften Lambdasonde wird zweckmäßigerweise eine vorbestimmte Betriebsart der Brennkraftmaschine, insbesondere ein Homogen-Lambda-1-Betrieb, eingestellt.

Für eine Abgasnachbehandlungsanordnung mit zwei parallel im Abgasstrang angeordneten Katalysatoren umfaßt die Bestimmung wenigstens eines Parameters der Lambdasonden beispielsweise eine Vertauschung der jeweiligen ersten Lambdasonden vor den Katalysatoren und/oder der jeweiligen zweiten Lambdasonden nach den Katalysatoren, wobei der Schritt (a) für einen zweiten der parallelen Katalysatoren um eine vorbestimmte Zeit versetzt später ausgeführt wird, als für den entsprechend anderen ersten der beiden parallelen Katalysatoren, wobei eine Vertauschung des Anschlusses der beiden ersten Lambdasonden der beiden Katalysatoren bestimmt wird, wenn für eine vorbestimmte Anzahl von Zyklen der Schritte (a) und (b) die erste Lambdasonde des zweiten Katalysators eine Zustandsänderung des Abgases vor der ersten Lambdasonde des ersten Katalysators anzeigt, und wobei eine Vertauschung des Anschlusses der beiden zweiten Lambdasonden der beiden Katalysatoren bestimmt wird, wenn für eine vorbestimmte Anzahl von Zyklen der Schritte (a) und (b) die zweite Lambdasonde des zweiten Katalysators eine Zustandsänderung des Abgases vor der zweiten Lambdasonde des ersten Katalysators anzeigt. Die Zustandsänderung des Abgases ist beispielsweise ein Sprung von magerer Abgaszusammensetzung zu fetter Abgaszusammensetzung oder ein Sprung von fetter Abgaszusammensetzung zu magerer Abgaszusammensetzung ist.

In einer bevorzugten Weiterbildung der Erfindung umfaßt die Bestimmung wenigstens eines Parameters der Lambdasonden ein Dynamikverhalten der Lambdasonden, wobei ein Gradient der zeitliche Änderung eines Ausgangssignals der Lambdasonden bestimmt wird und eine fehlerhafte Lambdasonde bestimmt wird, wenn der Gradient kleiner als ein vorbestimmter Wert ist. Der Gradient der zeitliche Änderung beim Übergang von fetter Abgaszusammensetzung zu magerer Abgaszusammensetzung wird beispielsweise am Ende von Schritt (b) bestimmt. Zweckmäßigerweise wird ein maximaler Gradient oder ein gemittelter Gradient bestimmt und mit einem entsprechenden, vorbestimmten Wert verglichen.

Um den aktiven Eingriff von Diagnosen, welche sich ggf. sowohl auf Verbrauch als auch auf Schadstoffemission negativ auswirken können, so gering wie möglich zu halten, werden weitere Prüfzyklen in Abhängigkeit vom Ergebnis der Bestimmung der Sauerstoffspeicherfähigkeit angefordert.

Beispielsweise für den Fall, daß die Sauerstoffspeicherfähigkeit einen Wert im Bereich eines frischen Katalysators ergibt und die Lambdasonden als funktionsfähig erkannt worden sind, werden für ein vorbestimmtes Zeitintervall, insbesondere bis zum nächsten Neustart der Brennkraftmaschine, keine weiteren Prüfzyklen angefordert.

Beispielsweise für den Fall, daß die Sauerstoffspeicherfähigkeit einen Wert im Bereich zwischen einem frischen Katalysator und einem defekten Katalysator ergibt, wird eine vorbestimmte erste Anzahl, insbesondere 2 bis 5, von weiteren Prüfzyklen angefordert.

Beispielsweise für den Fall, daß die Sauerstoffspeicherfähigkeit einen Wert im Bereich eines defekten Katalysators ergibt, wird eine vorbestimmte zweite Anzahl, insbesondere 6 bis 10, von weiteren Prüfzyklen angefordert.

Zweckmäßigerweise ist die erste Anzahl von weiteren Prüfzyklen kleiner als die zweite Anzahl von weiteren Prüfzyklen.

Zweckmäßigerweise wird im ersten Schritt (a) ein Lambdawert im Bereich von 0,95 bis 0,98 oder kleiner und im zweiten Schritt (b) ein Lambdawert im Bereich von 1,02 bis 1,05, insbesondere 1,03, eingestellt.

In einer bevorzugten Weiterbildung der Erfindung umfaßt die Bestimmung wenigstens eines Parameters der Lambdasonden eine Prüfung einer Magerspannung und/oder einer Fettspannung der ersten und/oder zweiten Lambdasonde.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine graphische Veranschaulichung einer Sauerstoffspeicherkapazität(OSC)-Messung eines Vorkatalysators bei Übergang von einer NOx-Regeneration in einen Magerbetrieb;
- Fig. 2: eine graphische Veranschaulichung einer Kombination von Katalysatorund Lambdasonden-Diagnose;
- Fig. 3: eine graphische Veranschaulichung einer Lambdasonden-Vertauschungserkennung für ein Zwei-Bank-Konzept bei korrekt angeschlossenen Lambdasonden;
- Fig. 4: eine graphische Veranschaulichung einer Lambdasonden-Vertauschungserkennung für ein Zwei-Bank-Konzept bei vertauschten Lambdasonden nach den Katalysatoren der Abgasbänke;
- Fig. 5: eine graphische Veranschaulichung einer Lambdasonden-Vertauschungserkennung für ein Zwei-Bank-Konzept bei vertauschten Lambdasonden vor den Katalysatoren der Abgasbänke;
- Fig. 6: eine schematische Darstellung einer Brennkraftmaschine mit Vorkatalysator und NOx-Speicherkatalysator;
- Fig. 7: eine schematische Darstellung einer Brennkraftmaschine mit zwei Abgasbänken, die jeweils einen Vorkatalysator mit jeweils stromauf und stromab angeordneten Lambdasonden aufweisen und
- Fig. 8: ein schematisches Blockdiagramm eines Verfahrens mit reduzierter Diagnosezeit für eine aktive Katalysatordiagnose.

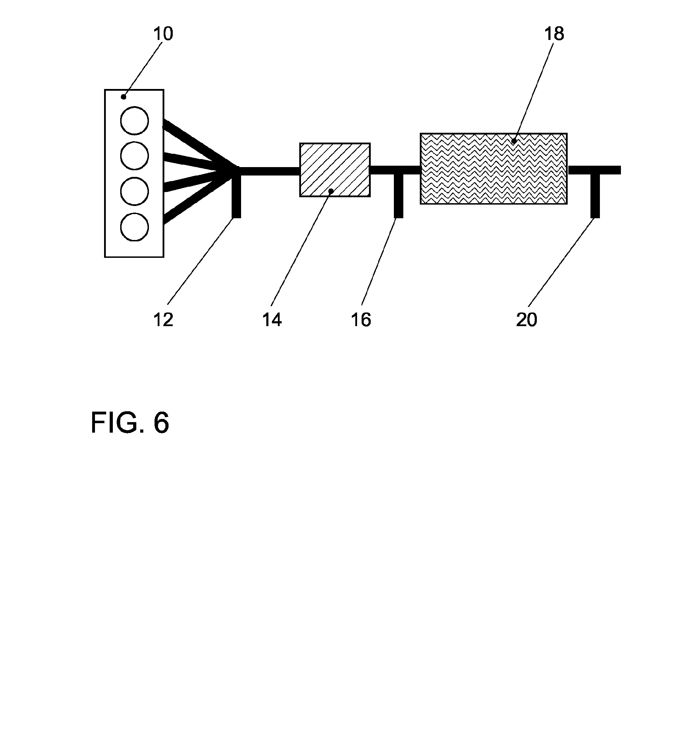

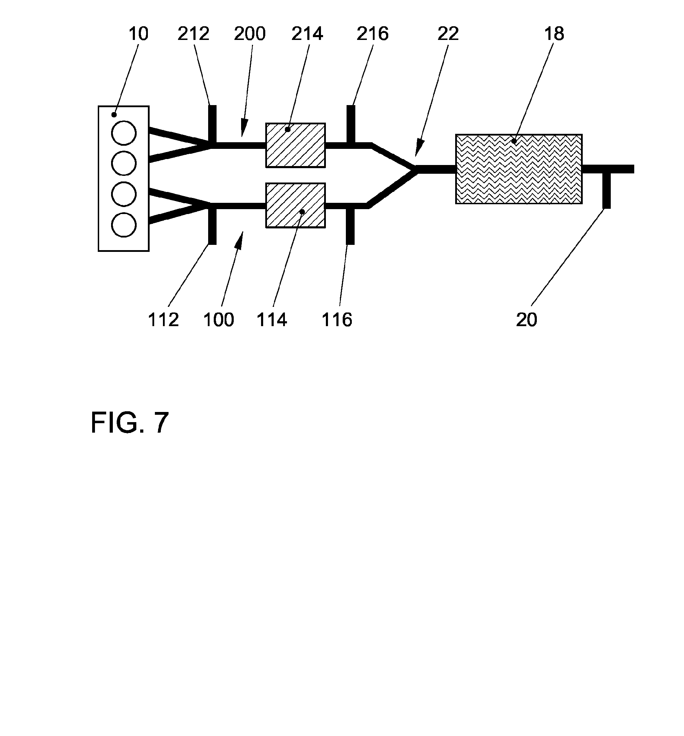

Die Erfindung wird nachfolgend beispielhaft für zwei Abgasnachbehandlungsanordnungen wie in den Fig. 6 und 7 dargestellt, beschrieben. In Fig. 6 weist eine Brennkraftmaschine 10 in einem Abgasstrang eine Abgasnachbehandlungsanordnung auf, die in Strömungsrichtung gesehen folgendes aufweist, eine erste Lambdasonde 12, welche zur Abgabe eines stetigen Lambdasignals ausgebildet ist, einen Vorkatalysator 14, eine zweite Lambdasonde 16, welche zur Abgabe eines Sprungsignals ausgebildet ist, einen NOₓ-Speicherkatalysator 18 und einen NOₓ-Sensor 20. Bei der Ausführung der Brennkraftmaschine 10 gemäß Fig. 7 weist die Abgasnachbehandlungsanordnung folgendes auf, eine erste Abgasbank 100 und eine zweite Abgasbank 200, die bei 22 zusammen führen und in einen gemeinsamen NOₓ-Speicherkatalysator 18 münden, dem ein NOₓ-Sensor 20 nachgeordnet ist. Die erste Abgasbank 100 umfaßt in Strömungsrichtung gesehen eine erste Lambdasonde 112 der ersten Abgasbank 100, welche zur Abgabe eines stetigen Lambdasignals ausgebildet ist, einen Vorkatalysator 114 der ersten Abgasbank 100 sowie eine zweite Lambdasonde 116 der ersten Abgasbank 100, welche zur Abgabe eines Sprungsignals ausgebildet ist. Die zweite Abgasbank 200 umfaßt in Strömungsrichtung gesehen eine erste Lambdasonde 212 der zweiten Abgasbank 200, welche zur Abgabe eines stetigen Lambdasignals ausgebildet ist, einen Vorkatalysator 214 der zweiten Abgasbank 200 sowie eine zweite Lambdasonde 216 der zweiten Abgasbank 200, welche zur Abgabe eines Sprungsignals ausgebildet ist.

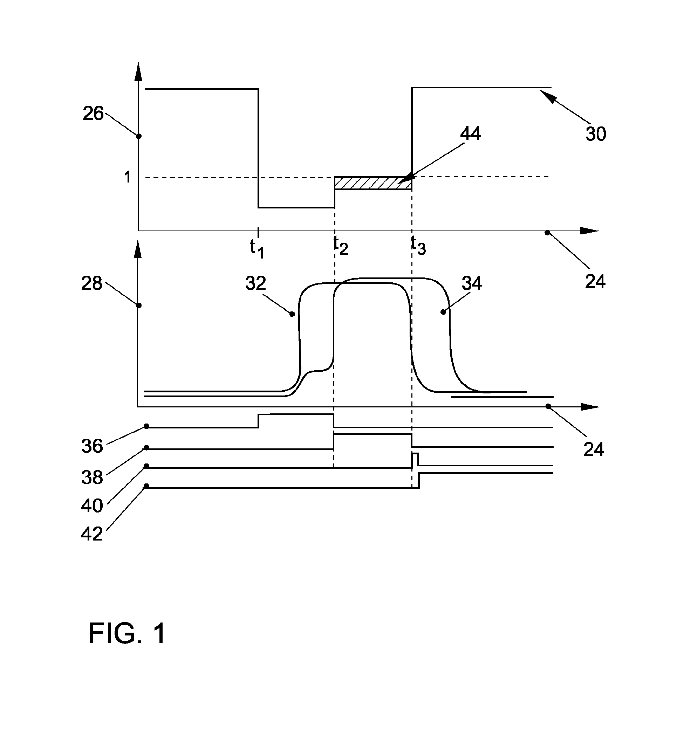

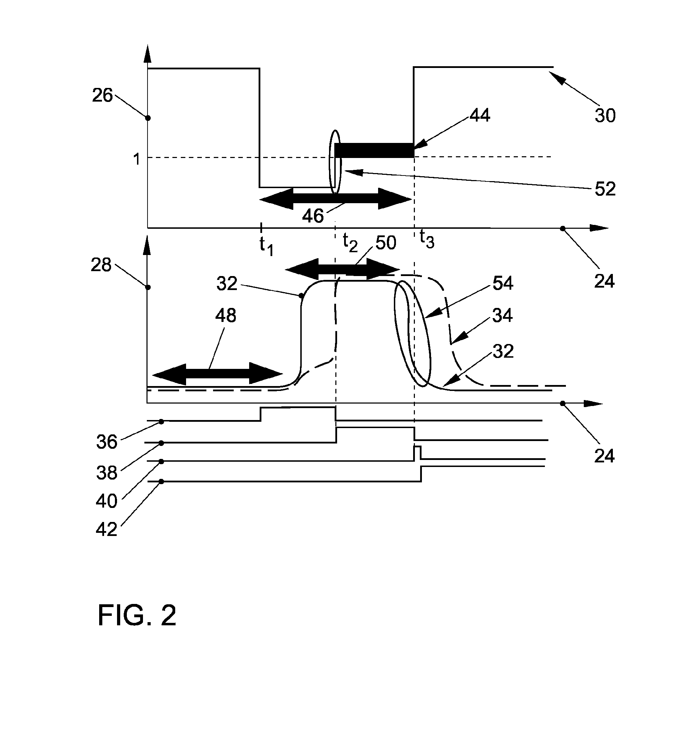

Fig. 1 und 2 veranschaulichen anhand von Graphen für Lambdawerte über die Zeit eine Messung einer Sauerstoffspeicherkapazität (OSC - Oxygen-Storage-Capacity) unter Ausnutzung einer NOₓ-Regeneration bei einer Brennkraftmaschine mit einer Konfiguration gemäß Fig. 6. In Fig. 1 ist auf den horizontalen Achsen 24 die Zeit t, auf der vertikalen Achse 26 ein Lambdawert und auf der vertikalen Achse 28 eine Sondenspannung aufgetragen. Ein Graph 30 zeigt einen zeitlichen Verlauf von Lambda vor dem Vorkatalysator 14. Ein Graph 32 zeigt eine Sondenspannung der Lambdasonde 16 nach dem Vorkatalysator 14. Ein Graph 34 zeigt eine Sondenspannung des NOₓ-Sensors 20 nach dem NOₓ-Speicherkatalysator 18. Zusätzlich sind die Signale "Anforderung der NOₓ-Regeneration" 36, "OSC-Messung" 38, "Ende der Messung OSC" 40 und "Freigabe Magerbetrieb" 42 in ihrer zeitlichen Korrelation zu den Graphen 30, 32 und 34 aufgetragen. Zum Zeitpunkt t₁ wird eine NOₓ-Regeneration angefordert, wobei vorher die Brennkraftmaschine in einem Magerbetrieb mit Lambda>>1 betrieben wurde. Im Zeitintervall t₁-t₂ wird zur NOₓ-Regeneration vor dem Vorkatalysator 14 ein Lambda im fetten Bereich (fette Abgaszusammensetzung) von beispielsweise 0,8 bis 0,9 eingestellt. Beendet wird diese Phase durch Wechsel des Lambdas nach dem NOₓ-Speicherkatalysator 18 von mager nach fett, d.h. die Sondenspannung 34 steigt sprungartig an. Bereits vor dem Zeitpunkt t₂ ist der gesamte Sauerstoff aus dem Vorkatalysator 14 ausgeräumt, was an dem Anstieg der Sondenspannung 32 der Lambdasonde 16 nach dem Vorkatalysator 14 (Sprung ins Fette) ersichtlich ist. Sobald das gesamte in dem NOₓ-Speicherkatalysator 18 enthaltene NOₓ umgesetzt ist, steigt auch die Sondenspannung 34, da das Regenerationsabgas bis nach dem NOₓ-Speicherkatalysator 18 durchbricht, was zu einem Ende der NOₓ-Regeneration zum Zeitpunkt t₂ führt. Je nach Betriebsartanforderung könnte nun in den Lambda-1-Betrieb oder den Magerbetrieb übergegangen werden. Es wird jedoch unabhängig von der sich der NOₓ-Regeneration im Zeitintervall t₁-t₂ anschließenden Betriebsart nach Beendigung der NOₓ-Regeneration bei t₂ auf einen mageren Lambda-1-Punkt (Lambda 1,02 bis 1,05) umgeschaltet und der in den Vorkatalysator eingetragene Sauerstoff aufkumuliert, bis die Sondenspannung 32 der Lambdasonde 16 nach dem Vorkatalysator 14 den Durchbruch von magerem Abgas zum Zeitpunkt t₃ anzeigt. Im Zeitintervall 44 vom Zeitpunkt t₂ bis zum Zeitpunkt t₃ wird Sauerstoff in den Vorkatalysator 14 eingetragen, bis dieser vollständig mit Sauerstoff beladen ist. Somit wird die NOₓ-Regeneration im Zeitintervall t₁-t₂ als OSC-Ausräumphase genutzt, so daß diese nicht zusätzlich extra ablaufen muß. Wie mit Pfeil 46 in Fig. 2 angedeutet, erfolgt somit die OSC-Messung im Zeitintervall t₁-t₃ und die NOₓ-Regeneration im Zeitintervall t₁-t₂. Somit überlappen sich diese beiden Vorgänge zeitlich bzw. teilweise parallel und benötigen insgesamt weniger Zeit, als wenn beide Vorgänge seriell bzw. separat nacheinander ablaufen würden.

Parallel zur OSC-Messung 46 werden die Lambdasignale 32 und 34 plausibilisiert und zwar bzgl. ihres Dynamikverhaltens überprüft und hinsichtlich der Vertauschung von jeweiligen ersten und zweiten Lambdasonden bei einem Zwei-Bank-System, wie in Fig. 7 dargestellt, überwacht, was nachfolgend genauer beschrieben wird.

Wie in Fig. 2 mit Pfeil 48 angedeutet, erfolgt im Zeitbereich vor t₁ eine Prüfung der Magerspannung der Sondensignale 32 und 34. Wie weiterhin mit Pfeil 50 angedeutet, erfolgt im Zeitintervall zwischen t₁ und t₂, also während der Ausräumphase der OSC-Messung bzw. der NOx-Regeneration, eine Prüfung der Fettspannung der Sondensignale 32 und 34.

Am Ende der NOₓ-Regeneration bzw. des Ausräumschrittes der OSC-Messung zum Zeitpunkt t₂ erfolgt ein Sprung von fetter Abgaszusammensetzung zu magerer Abgaszusammensetzung. Dies wird genutzt, um ein Dynamikverhalten der Lambdasonde 12 vor dem Vorkatalysator 14 zu prüfen. In Fig. 2 ist die Dynamikmessung der ersten Lambdasonde 12 mit 52 gekennzeichnet. Als Bewertungskriterium für die Dynamik wird beispielsweise der Gradient als Delta O₂/dt, Delta-Spannung/dt oder Delta-Sauerstoffpumpstrom/dt herangezogen. Es wird beispielsweise der Gradient zwischen den Lambdasollwerten mit dem tatsächlich gemessenen Gradienten des Lambdasignals verglichen. Unterschreitet der Dynamikwert eine vorbestimmte Schwelle, wird auf Fehler erkannt.

Zur Bewertung der Dynamik der Sondenspannung 32 der zweiten Lambdasonde 32 nach dem Vorkatalysator 14 wird der Sprung von fetter Abgaszusammensetzung zu magerer Abgaszusammensetzung zum Zeitpunkt t₃ am Ende der OSC-Messung 46 genutzt. In Fig. 2 ist die Dynamikmessung der zweiten Lambdasonde 16 mit 54 gekennzeichnet. Die Messung und Bewertung der Sondendynamik erfolgt beispielsweise analog wie bei der ersten Lambdasonde 12 vor dem Vorkatalysator 14.

Als Dynamikkriterium kann beispielsweise auch der maximale Gradient herangezogen werden, der sich beim Wechsel von fetter Abgaszusammensetzung nach magerer Abgaszusammensetzung ergibt. Alternativ wird ein gemittelter Gradient berechnet, der sich von einem Mindestfett-Lambdawert zu einem Mindestmager-Lambda ergibt.

Eine grobe Plausibilisierung der zweiten Lambdasonde 16 nach dem Vorkatalysator 14 in Relation zu der ersten Lambdasonde 12 vor dem Vorkatalysator 14 erfolgt in der jeweiligen Meßphase "Mager" im Zeitintervall t₂-t₃ bzw. "Fett" im Zeitintervall t₁₋t₂. Im Mageren mit Lambda > 1, beispielsweise Lambda = 1,03 bis 1,05, wird nach entsprechender Entprellzeit, welche Gaslaufzeiten und Katalysator-Ausräumzeiten berücksichtigt, geprüft, ob die zweite Lambdasonde 16 nach dem Vorkatalysator 14 ebenfalls mager anzeigt. Nach Einstellung von fettem Gemisch vor dem Vorkatalysator 14 wird nach entsprechender Entprellzeit überprüft, ob das Lambda nach dem Vorkatalysator 14 ebenfalls fett anzeigt.

Ergeben sich bei dieser Grobplausibilisierung zwischen "Lambda vor dem Vorkatalysator 14" und "Lambda nach dem Vorkatalysator 14" Plausibilitätsverletzungen, weil beispielsweise die erste Lambdasonde 12 vor dem Vorkatalysator "fett" anzeigt, wohingegen die zweite Lambdasonde 16 nach dem Vorkatalysator "mager" anzeigt oder umgekehrt, wird ein Fehlerverdacht gesetzt. Daraufhin wird eine genaue Überprüfung angestoßen, die die Zuordnung des Plausibilitätsfehlers zum Fehlerort gewährleisten soll, d.h. es wird festgestellt, ob die erste Lambdasonde 12 oder die zweite Lambdasonde 16 defekt ist. Für diese Überprüfung wird zweckmäßigerweise eine Betriebsart angefordert, die günstig für eine schnelle Fehlerfindung ist, wie beispielsweise ein Homogen-Lambda-1-Betrieb.

Um das gleichzeitige, parallel Ablaufen der Diagnose zu gewährleisten, wird eine Freigabe definiert, die sich aus den Unterfreigaben der einzelnen Prüffunktionen ergibt, wie Katalysatorprüfung, Lambdaprüfung usw.. Alternativ wird eine globale Freigabe definiert, die die physikalischen Prüfbedingungen der einzelnen Teilprüfungen berücksichtigt. Erst wenn diese Freigabe gegeben ist, wird die aktive Meßphase der Lambdaverstellung ausgeführt.

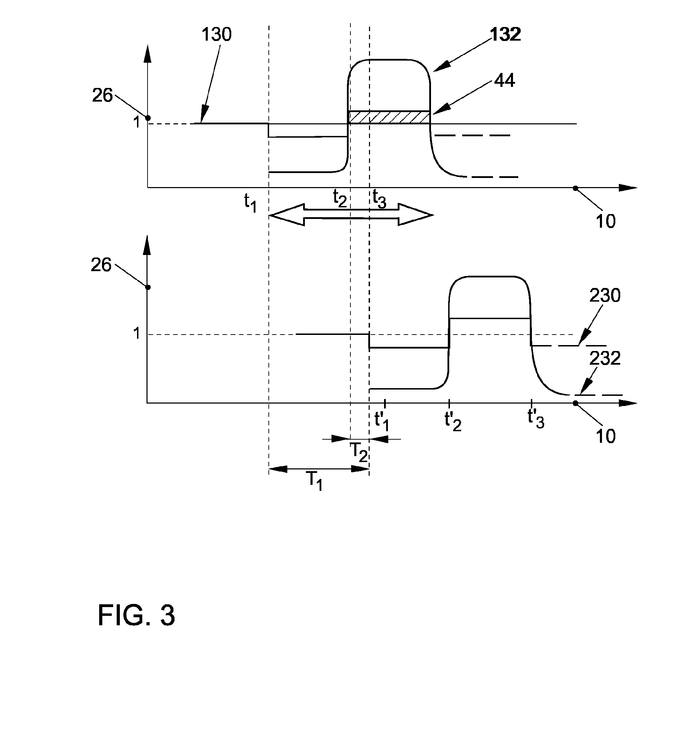

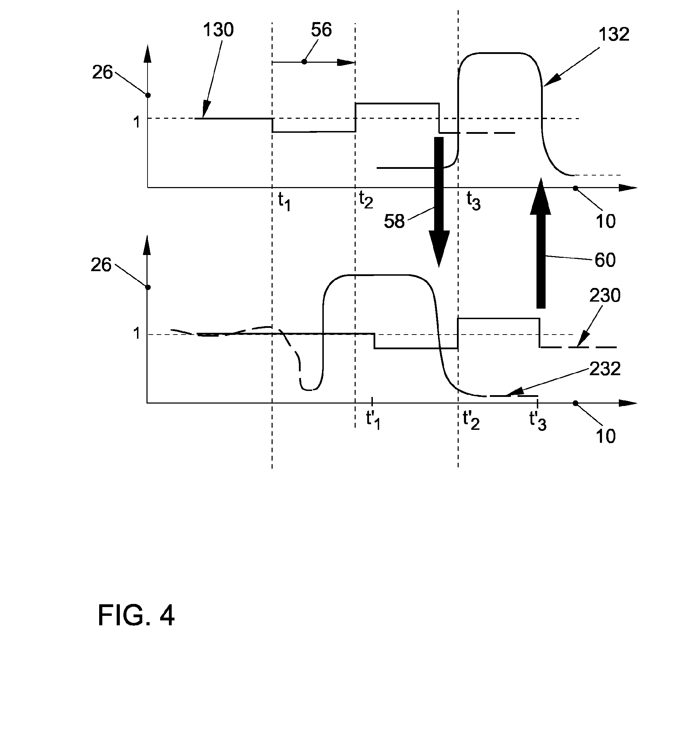

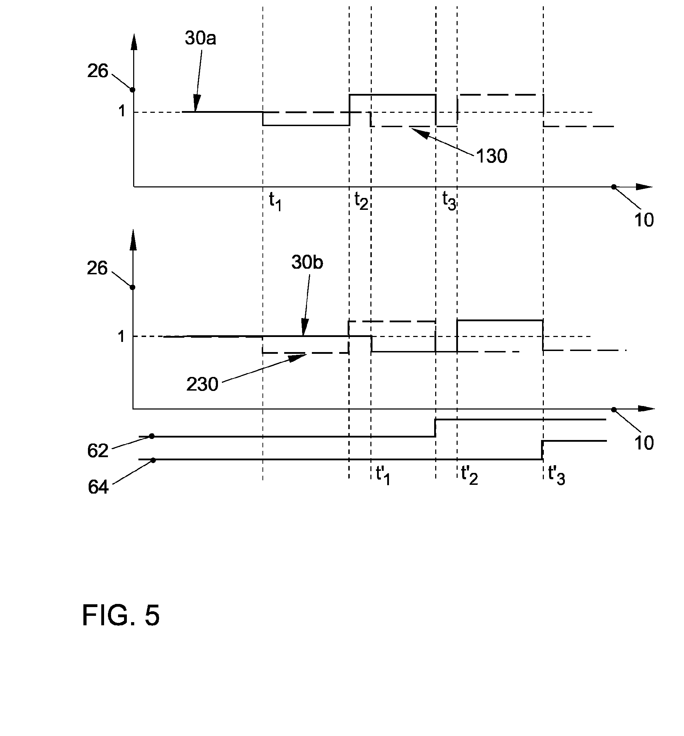

Fig. 3, 4 und 5 veranschaulichen einen Ablauf der Überwachung auf Sondenvertauschung zwischen den ersten Lambdasonden 112, 212 vor den Vorkatalysatoren 114, 214 und den zweiten Lambdasonden 116, 216 nach den Vorkatalysatoren 114, 214 jeweils der beiden Abgasbänke 100 und 200. Fig. 3 zeigt einen zeitlichen Verlauf von Lambdawerten bei einer Abgasnachbehandlungsanordnung im Zustand "i.O.", Fig. 4 zeigt einen zeitlichen Verlauf von Lambdawerten bei einer Abgasnachbehandlungsanordnung im Zustand "vertauschte zweite Lambdasonden 116, 216 nach dem Vorkatalysator 114, 214" und Fig. 5 zeigt einen zeitlichen Verlauf von Lambdawerten bei einer Abgasnachbehandlungsanordnung im Zustand "vertauschte erste Lambdasonden 112, 212 vor dem Vorkatalysator 114, 214". Das in Fig. 3, 4 und 5 jeweils obere Achsenkreuz betrifft die erste Abgasbank 100 und das jeweilige untere Achsenkreuz betrifft die zweite Abgasbank 200.

Auf den horizontalen Achsen 10 ist wieder die Zeit t und auf den vertikalen Achsen 26 ein Lambdawert aufgetragen. Graph 130 zeigt einen zeitlichen Verlauf von Lambda gemäß der ersten Lambdasonde 112 vor dem Vorkatalysator 114 für die erste Abgasbank 100 und Graph 132 zeigt einen zeitlichen Verlauf von Lambda gemäß der zweiten Lambdasonde 116 nach dem Vorkatalysator 114 für die erste Abgasbank 100. Graph 230 zeigt einen zeitlichen Verlauf von Lambda gemäß der ersten Lambdasonde 212 vor dem Vorkatalysator 214 für die zweite Abgasbank 200 und Graph 232 zeigt einen zeitlichen Verlauf von Lambda gemäß der zweiten Lambdasonde 216 nach dem Vorkatalysator 214 für die zweite Abgasbank 200. Bei einem System mit zwei Abgasbänken 100 und 200, wie in Fig. 7 dargestellt, besteht als weitere Fehlerquelle die Möglichkeit, daß die ersten Lambdasonden 112, 212 oder die zweiten Lambdasonden 116, 216 beim Einbau oder Wechsel vertauscht eingebaut werden. Dadurch passen die Lambda-Regelparameter einer Abgasbank 100, 200 nicht zum gemessenen Lambdasignal. Daraus resultieren falsche Reglereingriffe, die Fehldiagnosen oder Emissionsverschlechterungen zur Folge haben können.

Eine Vertauschungserkennung wird parallel zu dem aktiven Lambdaeingriff für die OSC-Messung 46 (Fig. 2) durchgeführt, wie in Fig. 3 graphisch veranschaulicht. Hierzu wird die aktive Lambdaverstellung für die Katalysatordiagnose für die beiden Abgasbänke 100 und 200 zeitlich versetzt angefordert. Der Zeitversatz T1 wird derart gewählt, daß zunächst die Lambdaverstellung für die erste Abgasbank 100 erfolgt und die Lambdaverstellung für die zweite Abgasbank 200 erst dann durchgeführt wird, wenn für die erste Bank 100 die Prüfung über den Sondensprung bei t₂ bereits beendet wurde oder im Fehlerfall ausreichend Zeit zum Ablauf der Diagnose in der ersten Abgasbank 100 gegeben war. Diese notwendige, zeitliche Verschiebung ist beispielsweise fest bedatet, insbesondere über ein Delta-T, oder die zeitliche Verschiebung wird über Modelle ermittelt, die das OSC des Vorkatalysators 114, 214 in Abhängigkeit von Gasdurchsatz, Katalysatortemperatur berücksichtigen. Ausgewertet wird entweder der Mager-Fett-Sprung oder der Fett-Mager-Sprung der Sondensignale 132, 232 bzw. 130, 230.

Fig. 4 veranschaulicht, wie sich vertauschte zweite Lambdasonden 116, 216 nach den Vorkatalysatoren 114, 214 auswirken und erkannt werden. Nach der Lambdaverstellung bei t₁ für die erste Abgasbank 100 reagiert die zweite Lambdasonde 116 nach dem Vorkatalysator 114 für diese Abgasbank 100 nicht, sondern es springt die zweite Lambdasonde 216 nach dem Vorkatalysator 214 der zweiten Abgasbank 200, wie mit Pfeil 58 angedeutet. Bei der anschließenden Verstellung für die zweite Abgasbank 200 bei t₁' gibt es die entsprechende, gleiche Fehlreaktion der zweiten Lambdasonde 116 nach dem Vorkatalysator 114 der ersten Abgasbank 100, wohingegen die zweite Lambdasonde 216 nach dem Vorkatalysator 214 der zweiten Abgasbank 200 nicht reagiert, wie mit Pfeil 60 angedeutet. Wird dieses Fehlverhalten in mehreren Meßphasen erkannt, so wird ein Fehler "zweite Lambdasonden 116, 216 nach dem Vorkatalysator 114, 214 vertauscht" gesetzt. Pfeil 56 bezeichnet eine maximale Zeit bis zu dem ein Sondensprung erwartet wird.

Fig. 5 veranschaulicht, wie sich vertauschte erste Lambdasonden 112, 212 vor dem Vorkatalysator 114, 214 auswirken und erkannt werden. Zur Überwachung wird hier der Lambda-Sollwert 30a vor dem Vorkatalysator 114 der ersten Abgasbank 100 und der Lambda-Sollwert 30b vor dem Vorkatalysator 214 der zweiten Abgasbank 200 mit dem Lambda-Istwert 130, 230 der ersten Lambdasonden 112, 212 vor dem Vorkatalysator 114, 214 bei aktiv angeforderter Verstellung verglichen. Zunächst wird im Zeitintervall t₁-t₂ eine Lambdasollverstellung für die erste Abgasbank 100 ausgegeben (beispielsweise fett: Katalysator ausräumen). Im Fehlerfall reagiert nicht die erste Lambdasonde 112 (Signal 130) vor dem Vorkatalysator 114 der ersten Abgasbank 100 auf die Verstellung, sondern die erste Lambdasonde 212 vor dem Vorkatalysator 214 der zweiten Abgasbank 200 (Signal 230). Beendet wird die Fettverstellung über das Lambdasignal 132 (Fig. 3) nach dem Vorkatalysator 114 der ersten Abgasbank 100. Bei der anschließenden Verstellung nach Mager für die erste Abgasbank 100 im Zeitintervall t₂-t₃ wird das Signal 230 der ersten Lambdasonde 212 vor dem Vorkatalysator 214 der zweiten Abgasbank 200 mager anzeigen, während das Signal 130 der ersten Lambdasonde 112 vor dem Vorkatalysator 114 der ersten Abgasbank 100 nicht reagiert. Das genau umgekehrte Verhalten ergibt sich bei den dazu zeitlich versetzten Lambdaverstellungen für die zweite Abgasbank 200 in den Zeitintervallen t₁'-t₂' und t₂'-t₃'. Nach einer entsprechend applizierbaren Anzahl von Verstellintervallen mit bestätigtem Fehler, wird ein Fehler "erste Lambdasonden 112, 212 vor dem Vorkatalysator 114, 214 vertauscht" gesetzt. Ein Signal 62 für "Fehlerverdacht" und ein Signal 64 für "Fehler" ist in Fig. 5 dargestellt.

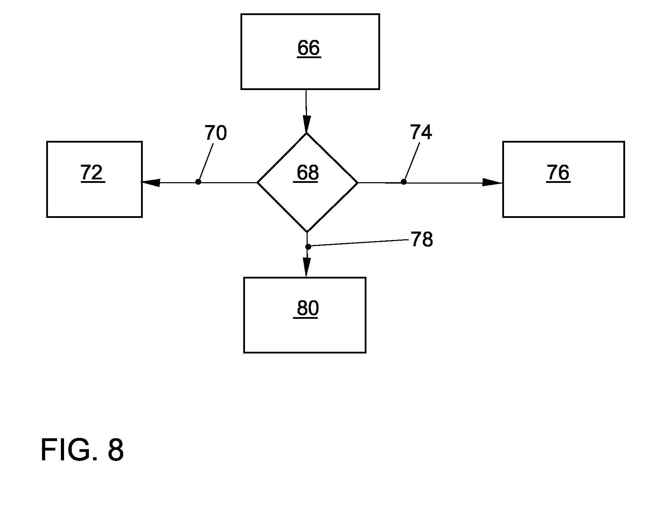

Um den aktiven Eingriff von Diagnosen, der sowohl aus Verbrauchsgründen, als auch aus Emissionsgründen negativ sein kann, so gering als möglich zu halten, ist es vorgesehen, abhängig vom Diagnoseergebnis zu bewerten, wie viele Prüfzyklen für ein sicheres Ergebnis notwendig sind. Dies ist auch in Fig. 8 anhand eines schematischen Ablaufdiagramms veranschaulicht. Ergibt der Prüfzyklus in Schritt 66 "OSC-Messung durchgeführt (1. Ergebnis)" bzgl. der Katalysatordiagnose (OSC-Messung) einen sehr großen OSC-Wert, der im Bereich eines Ergebnisses für einen frischen Katalysator liegt, so wird in einem Entscheidungsschritt 68 die Abzweigung 70 "OSC>>mäßg gealtert" zu Schritt 72 "Messende" gewählt und für diesen Trip die aktive Diagnose unterbunden, insofern die Lambdasignale bei der Prüfung plausibel und i.O. waren. Das Prüfergebnis für Katalysator und Lambdasonden wird für diesen Fall auf "geprüft" gesetzt (Zyklus-Flag oder Z_flag gesetzt). Liegt das Prüfergebnis für den OSC-Wert aus Schritt 66 zwischen dem Wert für einen sehr guten Katalysator und einem defekten Katalysator (n.i.O.), so wird in dem Entscheidungsschritt 68 die Abzweigung 74 "mäßig gealtert>OSC>Grenzkat" zu Schritt 76 "Anzahl x Prüfungen für Z_flag" gewählt, wobei x beispielsweise eine Zahl von 2 bis 5 ist, und es wird damit eine der Zahl x entsprechende Anzahl von Prüfungen angefordert, bevor der Katalysator als geprüft gilt. Liegt das Prüfergebnis für den OSC-Wert aus Schritt 66 im Bereich eines defekten Katalysators (n.i.O.), dann wird in dem Entscheidungsschritt 68 die Abzweigung 78 "OSC<Grenzkat" zu Schritt 80 "Anzahl y Prüfungen für Z_flag" gewählt, wobei y beispielsweise eine Zahl von 6 bis 10 ist, und es wird damit eine der Zahl y entsprechende Anzahl von Prüfungen angefordert, bevor der Katalysator als geprüft gilt, um den Fehler zu entprellen.

## Patentansprüche

1. Verfahren zum Betreiben einer Brennkraftmaschine, insbesondere eines Kraftfahrzeuges, mit einer in einem Abgastrakt der Brennkraftmaschine angeordneten Abgasnachbehandlungsanordnung mit wenigstens einem Katalysator und einer stromauf des Katalysators angeordneten ersten Lambdasonde und einer stromab des Katalysators angeordneten zweiten Lambdasonde, wobei zur Bestimmung einer Sauerstoffspeicherfähigkeit des Katalysators in einem ersten Schritt (a) ein Lambdawert vor dem Katalysator aktiv auf einen Wert kleiner 1 verstellt wird, bis ein in dem Katalysator gespeicherter Sauerstoff vollständig ausgetragen ist, und anschließend in einem zweiten Schritt (b) der Lambdawert vor dem Katalysator aktiv auf einen Wert größer 1 verstellt wird, bis der Katalysator vollständig mit Sauerstoff beladen ist, wobei mittels einer Sauerstoffbilanzierung die Sauerstoffspeicherfähigkeit des Katalysators bestimmt wird, wobei die Abgasnachbehandlungsanordnung zusätzlich einen dem Katalysator nachgeordneten NOx-Speicherkatalysator aufweist, wobei unter vorbestimmten Bedingungen eine zeitlich begrenzte NOₓ-Regeneration des NOₓ-Speicherkatalysators durchgeführt wird,
**dadurch gekennzeichnet,**
**daß** die NOₓ-Regeneration als erster Schritt (a) durchgeführt und nach Beendigung der NOₓ-Regeneration der zweite Schritt (b) durchgeführt wird.

2. Verfahren nach Anspruch 1, **dadurch gekennzeichnet, daß** der Katalysator ein Vorkatalysator oder ein Hauptkatalysator ist.

3. Verfahren nach Anspruch 1, **dadurch gekennzeichnet, daß** gleichzeitig während der Bestimmung der Sauerstoffspeicherfähigkeit wenigstens ein Parameter der Lambdasonden bestimmt und aus dem Parameter eine Funktionsfähigkeit der Lambdasonden bestimmt wird.

4. Verfahren nach Anspruch 3, **dadurch gekennzeichnet, daß** die Bestimmung wenigstens eines Parameters der Lambdasonden eine Plausibilitätsprüfung umfaßt, wobei im ersten Schritt (a) und/oder im zweiten Schritt (b) geprüft wird, ob erste und zweite Lambdasonde gleichzeitig die erwartete fette bzw. magere Abgaszusammensetzung anzeigen.

5. Verfahren nach Anspruch 4, **dadurch gekennzeichnet, daß** in dem Fall, daß die Plausibilitätsprüfung eine Plausibilitätsverletzung ergibt, d.h. eine unterschiedliche Anzeige der Abgaszusammensetzung vor und nach dem Katalysator durch der beiden Lambdasonden, wird bestimmt, ob die erste oder zweite Lambdasonde defekt ist.

6. Verfahren nach Anspruch 5, **dadurch gekennzeichnet, daß** zur Bestimmung der fehlerhaften Lambdasonde eine vorbestimmte Betriebsart der Brennkraftmaschine, insbesondere ein Homogen-Lambda-1-Betrieb, eingestellt wird.

7. Verfahren nach wenigstens einem der vorhergehenden Ansprüche, **dadurch gekennzeichnet, daß** für eine Abgasnachbehandlungsanordnung mit zwei parallel im Abgasstrang angeordneten Katalysatoren die Bestimmung wenigstens eines Parameters der Lambdasonden eine Vertauschung der jeweiligen ersten Lambdasonden vor den Katalysatoren und/oder der jeweiligen zweiten Lambdasonden nach den Katalysatoren umfaßt, wobei der Schritt (a) für einen zweiten der parallelen Katalysatoren um eine vorbestimmte Zeit versetzt später ausgeführt wird, als für den entsprechend anderen ersten der beiden parallelen Katalysatoren, wobei eine Vertauschung des Anschlusses der beiden ersten Lambdasonden der beiden Katalysatoren bestimmt wird, wenn für eine vorbestimmte Anzahl von Zyklen der Schritte (a) und (b) die erste Lambdasonde des zweiten Katalysators eine Zustandsänderung des Abgases vor der ersten Lambdasonde des ersten Katalysators anzeigt, und wobei eine Vertauschung des Anschlusses der beiden zweiten Lambdasonden der beiden Katalysatoren bestimmt wird, wenn für eine vorbestimmte Anzahl von Zyklen der Schritte (a) und (b)die zweite Lambdasonde des zweiten Katalysators eine Zustandsänderung des Abgases vor der zweiten Lambdasonde des ersten Katalysators anzeigt.

8. Verfahren nach Anspruch 7, **dadurch gekennzeichnet, daß** die Zustandsänderung des Abgases ein Sprung von magerer Abgaszusammensetzung zu fetter Abgaszusammensetzung oder ein Sprung von fetter Abgaszusammensetzung zu magerer Abgaszusammensetzung ist.

9. Verfahren nach wenigstens einem der vorhergehenden Ansprüche, **dadurch gekennzeichnet, daß** die Bestimmung wenigstens eines Parameters der Lambdasonden ein Dynamikverhalten der Lambdasonden umfaßt, wobei ein Gradient der zeitliche Änderung eines Ausgangssignals der Lambdasonden bestimmt wird und eine fehlerhafte Lambdasonde bestimmt wird, wenn der Gradient kleiner als ein vorbestimmter Wert ist.

10. Verfahren nach Anspruch 9, **dadurch gekennzeichnet, daß** der Gradient der zeitliche Änderung beim Übergang von fetter Abgaszusammensetzung zu magerer Abgaszusammensetzung am Ende von Schritt (b) bestimmt wird.

11. Verfahren nach Anspruch 9 oder 10, **dadurch gekennzeichnet, daß** ein maximaler Gradient oder ein gemittelter Gradient bestimmt und mit einem entsprechenden, vorbestimmten Wert verglichen wird.

12. Verfahren nach wenigstens einem der vorhergehenden Ansprüche, **dadurch gekennzeichnet, daß** in Abhängigkeit vom Ergebnis der Bestimmung der Sauerstoffspeicherfähigkeit weitere Prüfzyklen angefordert werden.

13. Verfahren nach Anspruch 12, **dadurch gekennzeichnet, daß** für den Fall, daß die Sauerstoffspeicherfähigkeit einen Wert im Bereich eines frischen Katalysators ergibt und die Lambdasonden als funktionsfähig erkannt worden sind, werden für ein vorbestimmtes Zeitintervall, insbesondere bis zum nächsten Neustart der Brennkraftmaschine, keine weiteren Prüfzyklen angefordert.

14. Verfahren nach Anspruch 12 oder 13, **dadurch gekennzeichnet, daß** für den Fall, daß die Sauerstoffspeicherfähigkeit einen Wert im Bereich zwischen einem frischen Katalysator und einem defekten Katalysator ergibt, eine vorbestimmte erste Anzahl, insbesondere 2 bis 5, von weiteren Prüfzyklen angefordert wird.

15. Verfahren nach einem der Ansprüche 12 bis 14, **dadurch gekennzeichnet, daß** für den Fall, daß die Sauerstoffspeicherfähigkeit einen Wert im Bereich eines defekten Katalysators ergibt, eine vorbestimmte zweite Anzahl, insbesondere 6 bis 10, von weiteren Prüfzyklen angefordert wird.

16. Verfahren nach Anspruch 14 und 15, **dadurch gekennzeichnet, daß** die erste Anzahl von weiteren Prüfzyklen kleiner ist als die zweite Anzahl von weiteren Prüfzyklen.

17. Verfahren nach wenigstens einem der vorhergehenden Ansprüche, **dadurch gekennzeichnet, daß** im ersten Schritt (a) ein Lambdawert im Bereich von 0,95 bis 0,98 oder kleiner eingestellt wird.

18. Verfahren nach wenigstens einem der vorhergehenden Ansprüche, **dadurch gekennzeichnet, daß** im zweiten Schritt (b) ein Lambdawert im Bereich von 1,02 bis 1,05, insbesondere 1,03, eingestellt wird.

19. Verfahren nach wenigstens einem der vorhergehenden Ansprüche, **dadurch gekennzeichnet, daß** die Bestimmung wenigstens eines Parameters der Lambdasonden eine Prüfung einer Magerspannung und/oder einer Fettspannung der ersten und/oder zweiten Lambdasonde umfaßt.
